# EUROPEAN PATENT APPLICATION

(11) **EP 3 106 486 A1**
(43) Date of publication of application: **21.12.2016**
(21) Application number: 15172521.5
(22) Date of filing: 17.06.2015
(51) Int. Cl.: C08G 64/02, C08F 290/06

(54) **CROSS-LINKED UNSATURATED POLYCARBONATE RESINS**

(71) Applicant: UBE Corporation Europe, S.A.U., 12100-Castellón (ES)
(72) Inventor: Costa Vayá, Victor Ignacio, 12100 Castellón (ES); Nohales Piqueras, Andrés, 12100 Castellón (ES)
(74) Representative: Plougmann Vingtoft a/s

(57) **Abstract**

The invention concerns cross-linked unsaturated polycarbonate resins having repeating units with the structures: 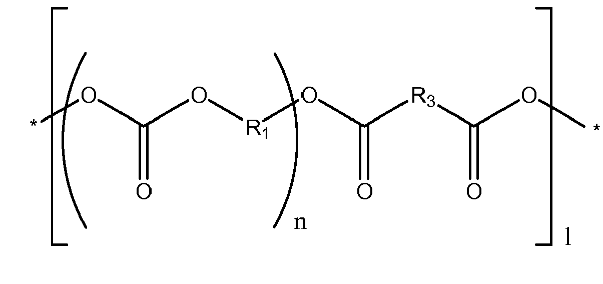 and

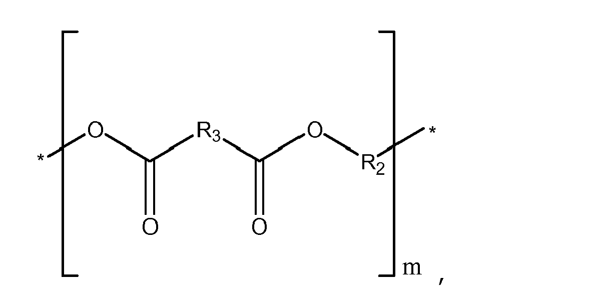

These cross-linked unsaturated polycarbonate resins display an improved flexibility compared to the corresponding polyester resins.

## Description

### Field of the invention

The present invention relates to cross-linked unsaturated polycarbonate resins displaying an improved flexibility compared to the corresponding polyester resins.

### Background of the invention

Unsaturated polyester resins, UPR, are condensation polymers with a polyester backbone formed from a glycol and an unsaturated diacid. Commonly used unsaturated diacids are maleic acid, fumaric acid and maleic anhydride. Other possibilities are phtalic anhydride and isophthalic acid. Saturated diacids are often used with the unsaturated diacid to control the degree of unsaturation and to modify the physical properties of the UPR.

In the development of unsaturated polyesters for high performance composites much attention has been given to the improvement of fracture toughness and impact resistance. The most common way is to add dispersed elastomers such as butadiene-acrylonitrile rubbers into the unsaturated polyester, where they form phase-separated domains. Chemical modification can be done by incorporation of aliphatic diols or dicarboxylic acids into the polyester chain during the polycondensation reaction. Another possibility for chemical modification is copolymerisation of poly(ethylene glycol)s into the polyester chain.

Unsaturated polycarbonate resins may be prepared in a similar manner to polyester resins using e.g. a polycarbonate diol in the polymerization reaction instead of or in combination with the glycols used for preparing polyesters. Examples in the art of preparing unsaturated polycarbonate resins include EP 13382144, US 2010/0041856, WO 2012/135186, and US 4267120.

Unsaturated polyester resins may be cross-linked through the unsaturation with vinyl monomers, such as styrene. WO 2012/027725 discloses the preparation of unsaturated polycarbonate resins by reacting epoxy compounds with carbon dioxide and even suggests cross-linking with vinyl monomers, such as styrene. However, it has been found that such cross-linked polycarbonate resins prepared from carbon dioxide provide an inferior product that cracks upon being de-moulded.

It is therefore an object of the invention to provide an improved cross-linked polycarbonate resin, which does not crack upon being de-moulded and has improved flexibility and/or durability.

### Summary of the invention

In a first aspect, the present invention concerns a cross-linked polymer composition obtainable by co-polymerizing a vinyl monomer cross-linking agent and a polycarbonate polymer comprising an unsaturated backbone, wherein said polycarbonate polymer comprises repeating units having the structures: 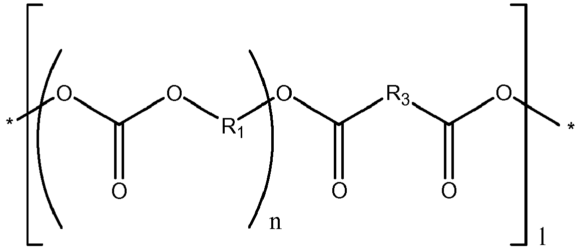 and 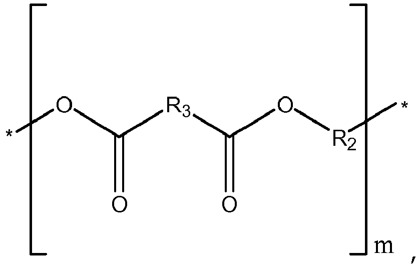 wherein
I is in the range 1 to 8, such as 1 to 5;
m is in the range 1 to 8, such as 1 to 5;
n is in the range of 1 to 12, such as 1 to 8, e.g. 1 to 5;
R₁ is an aliphatic alkanediyl having 3 to 8 carbon atoms, optionally substituted in one or more locations on the carbon backbone with C₁₋₈ alkyl, such as methyl, ethyl, propyl, or butyl; fluoro, chloro, or bromo, and optionally having a carbon atom in the aliphatic chain replaced by an oxygen atom to form an ether moiety;
R₂ is an optionally substituted aliphatic C₁₋₈ alkanediyl, optionally substituted C₂₋₈ alkenediyl, optionally substituted C₈₋₂₀ biradical comprising an aromatic moiety, or optionally substituted cycloalkanediyl having 3 to 8 carbon atoms;
R₃ is an optionally substituted aliphatic, alicyclic, or aromatic moiety having 2 to 10 carbon atoms with at least one unsaturated carbon-carbon bond.

It has been found that the cross-linked polymer composition of the present invention has low color, good clarity and excellent hydrolysis resistance for a variety of end-uses, including marine, automobile, construction, engineered stone, sport, furniture applications, and the like.

### Detailed description of the invention

### Definitions

In the context of the present invention, the term "optionally substituted" is intended to mean that the moiety in question is either substituted or unsubstituted. Substituted moieties may be substituted one or more times. Substituents in optionally substituted moieties may include C₁₋₄ alkyl, hydroxy, C₁₋₄ alkoxy, and/or halogen, such as chloro, bromo, and iodo.

In the context of the present invention, the term "C₁₋₄ alkyl" is intended to mean a linear or branched saturated hydrocarbon group having from one to four carbon atoms, such as methyl, ethyl, n-propyl, isopropyl, n-butyl, isobutyl, *sec*-butyl, and *tert*-butyl*.*

In the context of the present invention, the term "C₁₋₄ alkoxy" is intended to mean a C₁₋₄ alkyl-oxy, such as methoxy, ethoxy, n-propoxy, isopropoxy, n-butoxy, isobutoxy, sec-butoxy, and *tert*-butoxy.

In the context of the present invention, the term "C₁₋₈ alkyl" is intended to mean a linear or branched saturated hydrocarbon group having from one to eight carbon atoms, such as methyl, ethyl, n-propyl, isopropyl, n-butyl, isobutyl, *sec*-butyl, *tert*-butyl, n-pentyl, isopentyl, neopentyl, n-hexyl, n-heptyl, and n-octyl.

In the context of the present invention, the term "C₁₋₈ alkanediyl" is intended to mean a linear or branched saturated hydrocarbon group having from one to eight carbon atoms, such as methanediyl, ethanediyl, 1,3-propanediyl, 1,2-propanediyl, 1,4-butanediyl, 1,3-butanediyl, 1,2-butandiyl, 2,3-butandiyl, 1,5-pentandiyl, 1,4-pentanediyl, 1,3-pentanediyl, 1,6-hexanediyl, 1,7-heptanediyl, and 1,8-octanediyl.

### The unsaturated polycarbonate polymer

In a first aspect, the present invention concerns a cross-linked polymer composition obtainable by co-polymerizing a vinyl monomer cross-linking agent and a polycarbonate polymer comprising an unsaturated backbone, wherein said polycarbonate polymer comprises repeating units having the structures: 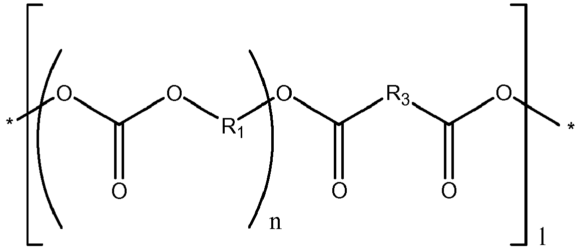 and 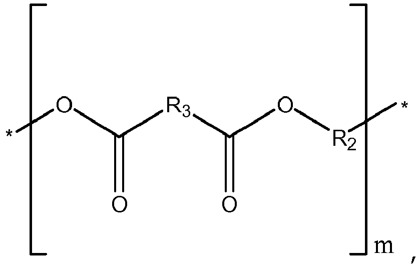 wherein
I is in the range 1 to 8, such as 1 to 5;
m is in the range 1 to 8, such as 1 to 5;
n is in the range of 1 to 12, such as 1 to 8, e.g. 1 to 5;
R₁ is an aliphatic alkanediyl having 3 to 8 carbon atoms, optionally substituted in one or more locations on the carbon backbone with C₁₋₈ alkyl, such as methyl, ethyl, propyl, or butyl; fluoro, chloro, or bromo, and optionally having a carbon atom in the aliphatic chain replaced by an oxygen atom to form an ether moiety;
R₂ is an optionally substituted aliphatic C₁₋₈ alkanediyl, optionally substituted C₂₋₈ alkenediyl, optionally substituted C₈₋₂₀ biradical comprising an aromatic moiety, or optionally substituted cycloalkanediyl having 3 to 8 carbon atoms;
R₃ is an optionally substituted aliphatic, alicyclic, or aromatic moiety having 2 to 10 carbon atoms with at least one unsaturated carbon-carbon bond.

The unsaturated polycarbonate polymer may vary in size. In one embodiment, the molecular weight of the polycarbonate polymer is in the range of about 250 g/mol to about 10000 g/mol. In another embodiment, the molecular weight of the polycarbonate polymer is in the range of about 300 g/mol to about 5000 g/mol.

R₁ is an aliphatic alkanediyl having 3 to 8 carbon atoms. In one embodiment, R₁ has 4 to 8 carbon atoms. In a further embodiment, R₁ has 5 to 7 carbon atoms. In still a further embodiment, R₁ has 6 carbon atoms. R₁ may be substituted or unsubstituted. If substituted, R₁ is substituted in one or more locations on the carbon backbone with C₁₋₈ alkyl, fluoro, chloro, or bromo. Furthermore, R₁ may optionally have a carbon atom in the aliphatic chain replaced by an oxygen atom to form an ether moiety. Said optional C₁₋₈ alkyl may in one embodiment be selected from group consisting of methyl, ethyl, n-propyl, isopropyl, n-butyl, isobutyl, *sec*-butyl, and tert-butyl. In further embodiment, said optional C₁₋₈ alkyl is selected from the group consisting of methyl and ethyl.

R₂ may be selected from the group consisting of optionally substituted aliphatic C₁₋₈ alkanediyl, optionally substituted aliphatic C₁₋₈ alkenediyl, optionally substituted C₈₋₂₀ biradical comprising an aromatic moiety, or optionally substituted cycloalkanediyl having 3 to 8 carbon atoms. In one embodiment, R₂ is an optionally substituted aliphatic C₁₋₈ alkanediyl. In this embodiment, R₁ may optionally have a carbon atom in the aliphatic chain replaced by an oxygen atom to form an ether moiety. In another embodiment, R₂ is selected from the group consisting of ethanediyl, 1,2-propanediyl, 1,3-propanediyl, 2-methyl-1,3-propanediyl, 2,2-dimethyl-1,3-propanediyl, 1,6-hexanediyl, [4-(methanediyl)cyclohexyl]methyl, 3-oxa-1,5-pentanediyl, and mixtures thereof. In still another embodiment, R₂ is selected from the group consisting of 1,2-propanediyl, 2,2-dimethyl-1,3-propanediyl, 1,6-hexanediyl, [4-(methanediyl)cyclohexyl]methyl, and mixtures thereof.

R₃ is an optionally substituted aliphatic, alicyclic, or aromatic moiety having 2 to 10 carbon atoms with at least one unsaturated carbon-carbon bond. In one embodiment, R₃ is selected from the group consisting of 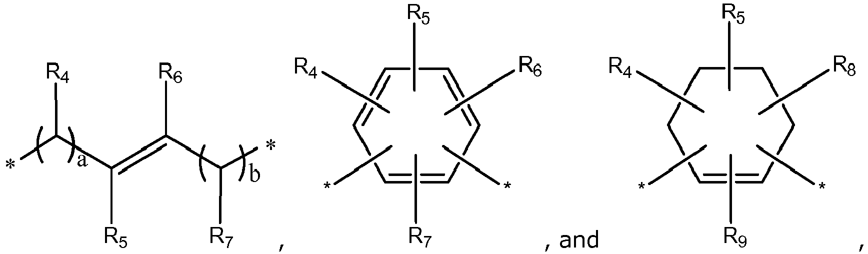 wherein
R₄, R₅, R₆, R₇, R₅, and R₉ are independently selected from the group consisting of hydrogen, methyl or ethyl; fluoro, chloro, bromo; or R₈ and R₉ may together form an alkanediyl having 1 to 4 carbon atoms; and
a and b are independently 0, 1, or 2. In one embodiment, a and b are both 0.

In a further embodiment, R₃ is

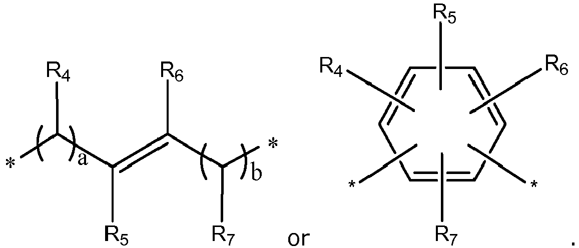

In still a further embodiment, R₃ is 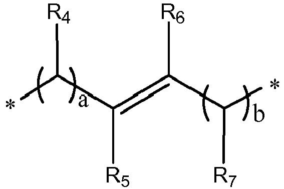 and
R₅ and R₆ are arranged in *trans* position to each other. In yet a further embodiment, R₄ and R₇ are hydrogen. In another embodiment, R₄, R₇, R₅, and R₉ are hydrogen. In still another embodiment, R₅ and R₆ are hydrogen. In yet another embodiment R₄, R₅, R₆, R₇, R₅, and R₉ are hydrogen.

In an embodiment, R₃ is

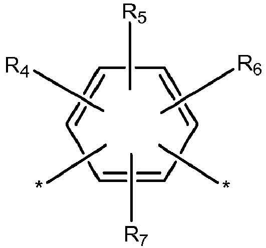

In this embodiment, the two radical groups may be in ortho, meta, or para to each other. In said embodiment, R₃ is

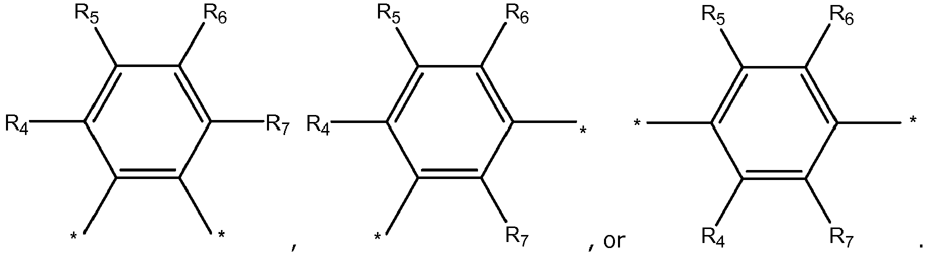

### Preparing the unsaturated polycarbonate polymer

Unsaturated polycarbonate polymers may be prepared by reacting an unsaturated diacid, a glycol, and a polycarbonate diol under conditions promoting polymerization. Reaction conditions are known to the skilled person from *inter alia* EP 13382144, US 2010/0041856, WO 2012/135186, and US 4267120, which are hereby incorporated herein in their entirety.

### Unsaturated diacids

Suitable unsaturated diacids for preparing unsaturated polycarbonate polymers may be unsaturated diacids *per se* or the corresponding anhydrides. Examples of suitable unsaturated diacids are maleic acid, fumaric acid and maleic anhydride. Further examples of suitable unsaturated diacids and anhydrides include phthalic anhydride and phthalic acid, more specifically ortho-phthalic anhydride, ortho-phthalic acid, and iso-phthalic acid. Other examples include terephthalic acid, dimethyl terephthalate, tetrahydrophthalic anhydride, nadic anhydride, methylnadic anhydride, hexahydrophthalic anhydride, and dimethyl terephthalate.

Saturated diacids may be used with the unsaturated diacids to control the degree of unsaturation.

### Glycols

Suitable glycols for preparing unsaturated polycarbonate polymers include ethylene glycol, diethylene glycol, triethylene glycol, propylene glycol, 1,3-propanediol, dipropylene glycol, 1,3-butanediol, 1,4-butanediol, 1,3-hexanediol, neopentyl glycol, butyl methyl 1,3-propanediol, 1-methyl-1,3-pentanediol, 2-methyl-1,3-propanediol, 1,3-butylene glycol, 1,6-hexanediol (HDL), hydrogenated bisphenol A, cyclohexane dimethanol (CHDM), 1,4-cyclohexanol, ethylene oxide adducts of bisphenols, propylene oxide adducts of bisphenols, sorbitol, 1,2,3,6-hexanetetrol, 1,4-sorbitan, pentaerythritol, dipentaerythritol, tripentaerythritol, 1,6-hexanediol dipentaerythritol, sucrose, 1,2,4-butanetriol, 1,2,5-pentanetriol, glycerol, 2-methyl-propanetriol, 2-methyl-1,2,4-butanetriol, trimethylol ethane, trimethylol propane, and 1,3,5-trihydroxyethyl benzene.

Preferred glycols include ethylene glycol, 1,2-propylene glycol (1,2-PG), 1,3-propanediol (1,3-PDO), diethylene glycol (DEG), neopentyl glycol (NPG) and 2-methyl-1,3-propanediol (MPDiol).

### Polycarbonate diols

Polycarbonate diols are commercially available. Suppliers include Ube Industries Ltd., Perstorp, Bayer MaterialScience, Caffaro, and Asahi Kasei Chemicals. Commercially available products include:
Eternacoll UM90; Eternacoll UH 50; Eternacoll UH 100; Eternacoll UH 200; Eternacoll UH 300; Eternacoll PH 50; Eternacoll PH 100; Eternacoll PH 200; Eternacoll PH 300; Eternacoll UHC 100; Eternacoll UHC 200; Eternacoll UC 100; Eternacoll UT 200; Oxymer C112; Oxymer M112; Desmophen C2100; Desmophen C2200; Desmophen XP 2613; Desmophen 3100 XP; Desmophen 3200 XP; Desmophen XP 2716; Desmophen C1100; Desmophen C1200; Duranol T5652; Duranol T5651; Duranol T5650J; Duranol G4672; Duranol T4671; Duranol T5652; Duranol T5651; Duranol T5650J; Duranol T4692; Duranol T4691; Duranol T5650E; Duranol G3452; Duranol G3450J; Ravecarb 102; Ravecarb 106; and Ravecarb 107.

Furthermore, synthetic methods of polycarbonate diols are described in the literature, including LiPing et al., Science China Chemistry, 2011, 54, pp 1468-1473, and references cited therein.

### Cross-linking with vinyl monomers

The unsaturated polycarbonate polymer may be cross-linked due to the unsaturation present in the polymer. It is well known to the person skilled in the art that polymer chains containing unsaturated moieties may be cross-linked using vinyl monomers. Accordingly, the unsaturated polycarbonate polymer may be cross-linked using a vinyl monomer.

In one embodiment of the invention, said vinyl monomer cross-linking agent is selected from the group consisting of optionally substituted styrenes, optionally substituted acrylates, optionally substituted vinyl ethers, and optionally substituted vinyl esters. In a further embodiment, said vinyl monomer cross-linking agent agent is selected from the group consisting of styrene, o-methylstyrene, m-methylstyrene, p-methylstyrene, 2,5-dimethylstyrene, 2,4,6-trimethylstyrene, p-hydroxystyrene, m-methoxystyrene, ethoxystyrene, propoxystyrene, tert-butoxystyrene, chlorostyrene, o-ethyl styrene, m-ethyl styrene, p-ethyl styrene, a-methyl styrene, o-t-butyl styrene, bromo styrene, trichloro styrene, p-t-butylstyrene, p-methoxystyrene, o-methoxystyrene, 2,4-dimethoxystyrene, vinyl toluene, vinylnaphthalene, vinylanthracene, divinylbenzene;
alkyl methacrylate having 2 to 18 carbon atoms in the alkyl group, such as methyl (meth)acrylate, ethyl (meth)acrylate, butyl (meth)acrylate, lauryl (meth)acrylate, stearyl (meth)acrylate, cyclohexyl (meth)acrylate, isobornyl (meth)acrylate, 2-hydroxyethyl (meth)acrylate, 2-hydroxypropyl (meth)acrylate, 2-hydroxy-2-methylpropyl (meth)acrylate, 2-methoxyethyl (meth)acrylate, 2-ethoxyethyl (meth)acrylate, benzyl (meth)acrylate, and phenyl (meth)acrylate, and alkyl acrylate having 1 to 18 carbon atoms in the alkyl group, such as methyl acrylate, ethyl acrylate, n-propyl acrylate, n-butyl acrylate, sec-butyl acrylate and 2-ethylhexyl acrylate;
compounds in which the hydroxyl group on both terminals of ethylene glycol or an oligomer thereof is esterified by acrylic acid or methacrylic acid, such as ethylene glycol di(meth)acrylate, diethylene glycol di(meth)acrylate, triethylene glycol di(meth)acrylate and tetraethylene glycol di(meth)acrylate; and compounds in which two hydroxyl groups in alcohol is esterified by acrylic acid or methacrylic acid, such as neopentyl glycol di(meth)acrylate and di(meth)acrylate; compounds produced by esterifying polyhydric alcohol derivatives by acrylic acid or methacrylic acid, such as trimethylolpropane and pentaerythritol.

In another embodiment, said vinyl monomer cross-linking agent is an optionally substituted styrene. In still another embodiment, said optionally substituted styrene is selected from the group consisting of styrene, o-methylstyrene, m-methylstyrene, p-methylstyrene, 2,5-dimethylstyrene, 2,4,6-trimethylstyrene, p-hydroxystyrene, m-methoxystyrene, ethoxystyrene, propoxystyrene, tert-butoxystyrene, chlorostyrene, o-ethyl styrene, m-ethyl styrene, p-ethyl styrene, a-methyl styrene, o-t-butyl styrene, bromo styrene, trichloro styrene, p-t-butylstyrene, p-methoxystyrene, o-methoxystyrene, and 2,4-dimethoxystyrene. In yet another embodiment, said vinyl cross-linking agent is styrene.

The skilled person will be aware that accelerators and initiators are advantageously used for cross-linking unsaturated polyester resins. Similarly, accelerators and initiators used for unsaturated polyester resins may be used for the unsaturated polycarbonate resins according to the present invention.

Suitable accelerators for use in accordance with the present invention include cobalt ligands, such as cobalt naphtenate and cobalt octoate, copper complexes, manganese complexes , potassium complexes, and iron complexes, optionally in combination with amines, such as dimethylamine, diethyl aniline, dimethyl-p-toluidine, and N,N'-dimethylaniline.

Suitable initiators for use in accordance with the present invention include benzoyl peroxide, methyl ethyl ketone peroxide, tert-butyl hydroperoxide, peroxybenzoate, cumene hydroperoxides, and other peroxides.

### Examples

### Example 1a - Preparation of an unsaturated polycarbonate resin

A two-liter reactor equipped with a mechanical stirrer, nitrogen inlet, and steam-jacketed condenser is charged with 414 g polycarbonatediol, Eternacoll UM90 (Ube Industries), OH value 124.3 mg KOH/g, 704.2 g cyclohexane dimethanol, 291.1 g 1,6 hexanediol, and 600.4 g maleic anhydride. The mixture is heated to 200 °C for about 10h. At the end of this period the mixture is clear, APHA color 20, and has an acid number of 0.3 mg KOH/g, water content 385 ppm, viscosity 4999 cps at 80 °C and OH value 95.5 mg KOH/g. Molecular weight distribution by Gel Permeation Chromatography is Mn 1891 and Mw 4430.

### Example 1b - Cross-linking of an unsaturated polycarbonate resin

The product from Example 1a is blended with styrene at 75° C to give a solution containing 35 % by weight of unsaturated polycarbonate in styrene. The styrene solution is clear upon storage. The viscosity of the polymer solution in styrene is 315 cps at 30° C.

The styrene solution is blended with 0.1 phr cobalt octoate, after that this blend is mixed with 1.5 phr methyl ethyl ketone peroxide. The polymer is cross-linked overnight and post-cured for 2 h at 80 °C and 1h at 120°C.

### Example 2a - Preparation of an unsaturated polycarbonate resin

A one-liter reactor equipped with a mechanical stirrer, nitrogen inlet, and steam-jacketed condenser is charged with 149.6 g polycarbonatediol Oxymer C112 (Perstorp), OH value 121.1 mg KOH/g, 123.1 g neopentyl glycol, and 123.8 g maleic anhydride. The mixture is heated to 200 °C for about 7h. At the end of this period, the mixture is clear, APHA color 20, and has an acid number of 20.83 mg KOH/g, water content 361 ppm, viscosity 6804 cps at 75 °C, and OH value 56 mg KOH/g. Molecular weight distribution by Gel Permeation Chromatography is Mn 1583 and Mw 3297.

### Example 2b - Cross-linking of an unsaturated polycarbonate resin

The product from Example 2a is blended with styrene at 75° C and blended with styrene to give a solution containing 35 % by weight of unsaturated polycarbonate in styrene. The styrene solution is clear upon storage. The viscosity of the polymer solution in styrene is 286 cps at 25° C.

The styrene solution is blended with 0.1 phr cobalt octoate, after that this blend is mixed with 1.5 phr methyl ethyl ketone peroxide. The polymer is cross-linked overnight and post-cured for 2 h at 80 °C and 1h at 120°C.

### Example 3a - Preparation of an unsaturated polycarbonate resin

A two-liter reactor equipped with a mechanical stirrer, nitrogen inlet, and steam-jacketed condenser is charged with 328 g polycarbonatediol Eternacoll UH200 (Ube Industries), OH value 56.1 mg KOH/g, 417.95 g 1,6 hexanediol, and 323.9 g maleic anhydride. The mixture is heated to 200 °C for about 8h. At the end of this period, the mixture is clear, APHA color 70, and has an acid number of 0.71 mg KOH/g, water content 270 ppm, viscosity 4771 cps at 75 °C and OH value 44 mg KOH/g. Molecular weight distribution by Gel Permeation Chromatography is Mn 3754 and Mw 9848.

### Example 3b - Cross-linking of an unsaturated polycarbonate resin

The product from Example 3a is blended with styrene at 75° C and blended with styrene to give a solution containing 35 % by weight of unsaturated polycarbonate in styrene. The styrene solution is clear upon storage. The viscosity of the polymer solution in styrene is 810 cps at 25° C.

The styrene solution is blended with 0.1 phr cobalt octoate, after that this blend is mixed with 1.5 phr methyl ethyl ketone peroxide. The polymer is cross-linked overnight and post-cured for 2 h at 80 °C and 1h at 120°C.

Test results for the polymers prepared in Examples 1 to 3 are presented below in Table 1:

**Table 1 - Test results for Examples 1 to 3**

| | Example 1 | Example 2 | Example 3 | Derakane 411-350 | Arapol 7130B |
|---|---|---|---|---|---|
| Mw | 4430 | 3297 | 9848 | 3410 | 6520 |
| Mn | 1891 | 1583 | 3754 | 1390 | 2555 |
| Solution viscosity in styrene at 30 °C 35% (w/w) | 313 | 280 | 810 | 340 | 681 |
| Tensile strength | 28 | 46.1 | 22.2 | 45.6 | 27.4 |
| Tensile modulus | 1197 | 2074 | 961 | 3284 | 3701 |
| Tensile Elongation (%) | 4.8 | 3.4 | 4.4 | 1.5 | 0.9 |
| Flexural strength | 41 | 68 | 34. 3 | 81 | 54 |
| Flexural modulus | 1215 | 2102 | 988 | 3002 | 3204 |
| Flexural Elongation (%) | 6.7 | 4.3 | 6.1 | 2.7 | 1.6 |

### Example 4a - Comparative example

A one-liter reactor equipped with a mechanical stirrer, nitrogen inlet, and steam-jacketed condenser is charged with 602 g polycarbonatediol PPC-1PG (Novomer), OH value mg KOH/g, 110.19 g 1,2-propanediol, and 307.11 g maleic anhydride. The mixture is heated to 200 °C for about 16h. At the end of this period, the mixture is clear, APHA color 1826, and has an acid number of 66.84 mg KOH/g, water content 438 ppm, 38.74 cps at 75 °C, and OH value 61.7 mg KOH/g. Molecular weight distribution by Gel Permeation Chromatography is Mn 1341 and Mw 3014.

### Example 4b- Comparative example Cross-linking of an unsaturated polycarbonate resin

The product from Example 4a is blended with styrene at 75° C and blended with styrene to give a solution containing 35 % by weight of unsaturated polycarbonate in styrene. The styrene solution is clear upon storage. The viscosity of the polymer solution in styrene is 19 cps at 25° C.

The styrene solution is blended with 0.1 phr cobalt octoate, after that this blend is mixed with 1.5 phr methyl ethyl ketone peroxide. The polymer is cross-linked overnight and post-cured for 2 h at 80 °C and 1h at 120°C.

It was found that this cross-linked polymer, based on a polycarbonate diol wherein R₁ has only two carbon atoms in the alkanediyl, cracked upon demolding. Thus, this polymer was found to provide an inferior product compared to the polymer according to the invention.

## Claims

1. A cross-linked polymer composition obtainable by co-polymerizing a vinyl monomer cross-linking agent and a polycarbonate polymer comprising an unsaturated backbone, wherein said polycarbonate polymer comprises repeating units having the structures: 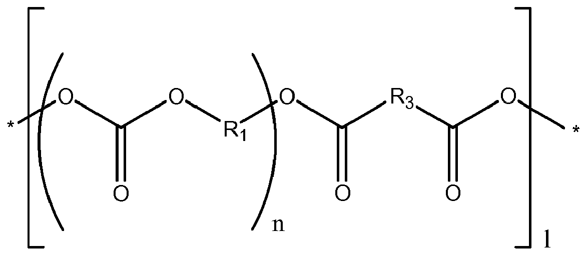 and 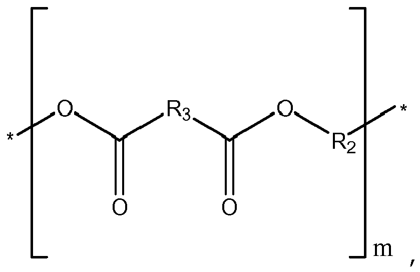 wherein
I is in the range 1 to 8, such as 1 to 5;
m is in the range 1 to 8, such as 1 to 5;
n is in the range of 1 to 12, such as 1 to 8, e.g. 1 to 5;
R₁ is an aliphatic alkanediyl having 3 to 8 carbon atoms, optionally substituted in one or more locations on the carbon backbone with C₁₋₈ alkyl, such as methyl; ethyl, propyl, or butyl; fluoro, chloro, or bromo, and optionally having a carbon atom in the aliphatic chain replaced by an oxygen atom to form an ether moiety;
R₂ is an optionally substituted aliphatic C₁₋₈ alkanediyl, optionally substituted aliphatic C₂₋₈ alkenediyl, optionally substituted C₈₋₂₀ biradical comprising an aromatic moiety, or optionally substituted cycloalkanediyl having 3 to 8 carbon atoms;
R₃ is an optionally substituted aliphatic, alicyclic, or aromatic moiety having 2 to 10 carbon atoms with at least one unsaturated carbon-carbon bond.

2. The polymer composition according to claim 1, wherein said vinyl monomer cross-linking agent is selected from the group consisting of optionally substituted styrenes, optionally substituted acrylates, optionally substituted vinyl ethers, and optionally substituted vinyl esters.

3. The polymer composition according to claim 2, wherein said vinyl monomer cross-linking agent is selected from the group consisting of styrene, o-methylstyrene, m-methylstyrene, p-methylstyrene, 2,5-dimethylstyrene, 2,4,6-trimethylstyrene, p-hydroxystyrene, m-methoxystyrene, ethoxystyrene, propoxystyrene, tert-butoxystyrene, chlorostyrene, o-ethyl styrene, m-ethyl styrene, p-ethyl styrene, a-methyl styrene, o-t-butyl styrene, bromo styrene, trichloro styrene, p-t-butylstyrene, p-methoxystyrene, o-methoxystyrene, 2,4-dimethoxystyrene, vinyl toluene, vinylnaphthalene, vinylanthracene, divinylbenzene;
alkyl methacrylate having 2 to 18 carbon atoms in the alkyl group, such as methyl (meth)acrylate, ethyl (meth)acrylate, butyl (meth)acrylate, lauryl (meth)acrylate, stearyl (meth)acrylate, cyclohexyl (meth)acrylate, isobornyl (meth)acrylate, 2-hydroxyethyl (meth)acrylate, 2-hydroxypropyl (meth)acrylate, 2-hydroxy-2-methylpropyl (meth)acrylate, 2-methoxyethyl (meth)acrylate, 2-ethoxyethyl (meth)acrylate, benzyl (meth)acrylate, and phenyl (meth)acrylate, and alkyl acrylate having 1 to 18 carbon atoms in the alkyl group, such as methyl acrylate, ethyl acrylate, n-propyl acrylate, n-butyl acrylate, sec-butyl acrylate and 2-ethylhexyl acrylate;
compounds in which the hydroxyl group on both terminals of ethylene glycol or an oligomer thereof is esterified by acrylic acid or methacrylic acid, such as ethylene glycol di(meth)acrylate, diethylene glycol di(meth)acrylate, triethylene glycol di(meth)acrylate and tetraethylene glycol di(meth)acrylate; and
compounds in which two hydroxyl groups in alcohol is esterified by acrylic acid or methacrylic acid, such as neopentyl glycol di(meth)acrylate and di(meth)acrylate; compounds produced by esterifying polyhydric alcohol derivatives by acrylic acid or methacrylic acid, such as trimethylolpropane and pentaerythritol.

4. The polymer composition according to claim 2, wherein said vinyl monomer cross-linking agent is an optionally substituted styrene.

5. The polymer composition according to claim 4, wherein said optionally substituted styrene is selected from the group consisting of styrene, o-methylstyrene, m-methylstyrene, p-methylstyrene, 2,5-dimethylstyrene, 2,4,6-trimethylstyrene, p-hydroxystyrene, m-methoxystyrene, ethoxystyrene, propoxystyrene, tert-butoxystyrene, chlorostyrene, o-ethyl styrene, m-ethyl styrene, p-ethyl styrene, a-methyl styrene, o-t-butyl styrene, bromo styrene, trichloro styrene, p-t-butylstyrene, p-methoxystyrene, o-methoxystyrene, and 2,4-dimethoxystyrene.

6. The polymer composition according to any one of the preceding claims, wherein R₃ is selected from the group consisting of 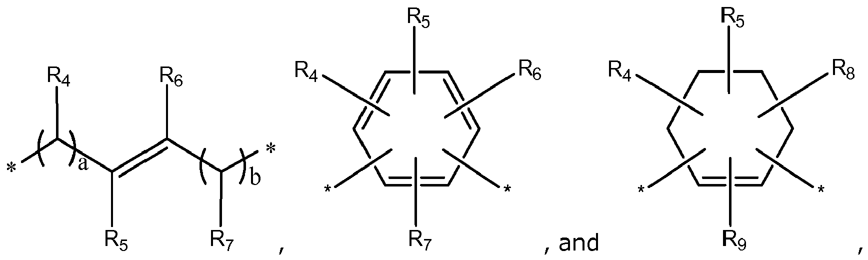 wherein
R₄, R₅, R₆, R₇, R₅, and R₉ are independently selected from the group consisting of hydrogen, methyl, ethyl, propyl, or butyl; fluoro, chloro, bromo; or R₈ and R₉ may together form an alkanediyl having 1 to 4 carbon atoms; and
a and b are independently 0, 1, or 2.

7. The polymer composition according to claim 6, wherein R₄, R₇, R₅, and R₉ are hydrogen.

8. The polymer composition according to claim 6, wherein R₃ is 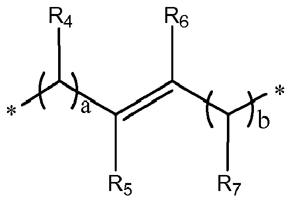 and
R₅ and R₆ are arranged in *trans* position to each other.

9. The polymer composition according to claim 8, wherein R₄ and R₇ are hydrogen.

10. The polymer composition according to claim 8, wherein a and b are 0.

11. The polymer composition according to any one of claims 8 to 10, wherein R₅ and R₆ are hydrogen.

12. The polymer composition according to any one of the precedings claims, wherein the molecular weight of the polycarbonate polymer is in the range of about 250 g/mol to about 10000 g/mol.
